# EUROPEAN PATENT SPECIFICATION

(11) **EP 4 473 473 B1**
(45) Date of publication and mention of the grant of the patent: **08.04.2026**
(21) Application number: 23708122.9
(22) Date of filing: 31.01.2023
(51) Int. Cl.: G06T 5/50, G06T 5/77

(54) **VISUAL EFFECTS PROCESSING FRAMEWORK**
VERARBEITUNGSRAHMEN FÜR VISUELLE EFFEKTE
CADRICIEL DE TRAITEMENT D'EFFETS VISUELS

(30) Priority: 01.02.2022 US 202217590396
(43) Date of publication of application: 11.12.2024
(73) Proprietor: Netflix, Inc., Los Gatos, California 95032 (US)
(72) Inventor: BHATTACHARYA, Subhabrata, Los Gatos, California 95032 (US); KAMATH, Nagendra K., Los Gatos, California 95032 (US)
(74) Representative: Morrall, Jonathan Ian McLachlan
(86) International application number: PCT/US2023/061657
(87) International publication number: WO 2023/150504

(56) References cited:
- JP-A- H0 746 399
- US-A1- 2006 171 602
- RASHI AGARWAL: "Bit plane average filtering to remove Gaussian noise from high contrast images", COMPUTER COMMUNICATION AND INFORMATICS (ICCCI), 2012 INTERNATIONAL CONFERENCE ON, IEEE, 10 January 2012 (2012-01-10), pages 1 - 5, XP032123411, ISBN: 978-1-4577-1580-8, DOI: 10.1109/ICCCI.2012.6158801

## Description

### CROSS-REFERENCE TO RELATED APPLICATIONS

This application claims benefit of United States patent application serial number 17/590,396 filed February 1, 2022.

### BACKGROUND

### Field of the Various Embodiments

Embodiments of the present disclosure relate generally to computer vision and image processing and, more specifically, to a visual effects processing framework.

### Description of the Related Art

Visual effects involves the creation, manipulation, or enhancement of images in the context of live-action video production or filmmaking. For example, computer-based visual effects tools can be used to remove objects, create three-dimensional (3D) animations, smooth video footage, composite visual elements from multiple sources into a single video stream, and/or otherwise generate or modify video frames.

However, existing video effects tools are associated with a number of drawbacks. First, many computer-based visual effects tools are inefficient and difficult to scale. For example, a visual effects artist could spend hours interacting with a visual effects application to remove wires, markers, production crew, and/or other objects from a shot or scene. During this process, the visual effects artist would need to manually select and configure a "rig removal" tool within the visual effects application to account for the size and shape of each object, the movement of each object, camera motion, backgrounds against which the objects are set, and/or other factors. Accordingly, a team of visual effects artists would be unable to apply visual effects quickly enough to support an increase in the amount of video content to which the visual effects are to be applied.

Second, many state-of-the-art visual effects techniques are designed to work with specific types of data. More specifically, many deep-learning-based image processing techniques that can be used to apply visual effects to video are developed for images that are eight bits per color channel. As a result, these techniques cannot be used with images or video with greater bit depths, such as professionally produced video that includes 16 or 32 bits per color channel.

As the foregoing illustrates, what is needed in the art are more effective techniques for applying visual effects to video.

US2006171602A1 describes a method and system obtains a linear combination in accordance with an image processing algorithm using at least one lookup table that is indexed by at least one subset of bits from a set of pixels in an image.

"Bit plane average filtering to remove Gaussian noise from high contrast images" by Rashi Agarwal describes a method to remove Gaussian noise from high contrast images by using a modified moving average filter applied over bit planes of an image.

### SUMMARY

According to first aspect of the invention to which this European patent is directed, there is provided a method as defined in claim 1. According to a second aspect of the invention to which this European patent is directed, there is provided a computer program product as defined in claim 9. According to a third aspect of the invention to which this European patent is directed, there is provided a system as defined in claim 10.

One technical advantage of the disclosed techniques relative to the prior art is that visual effects can be applied more efficiently to video content that varies in background motion and/or other attributes, unlike conventional approaches that require manual selection and/or configuration of visual effects tools to account for these attributes. Another technical advantage of the disclosed techniques is that various image processing techniques can be adapted for use with video content that has a higher color depth. Accordingly, the disclosed techniques improve the quality of the visual effects over conventional approaches that limit the color depth of videos that can be used with certain image processing techniques. These technical advantages provide one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a network infrastructure configured to implement one or more aspects of the various embodiments.
Figure 2 is a block diagram of a content server that may be implemented in conjunction with the network infrastructure of Figure 1, according to various embodiments.
Figure 3 is a block diagram of a control server that may be implemented in conjunction with the network infrastructure of Figure 1, according to various embodiments.
Figure 4 is a block diagram of an endpoint device that may be implemented in conjunction with the network infrastructure of Figure 1, according to various embodiments.
Figure 5 illustrates a system for performing visual effects processing, according to various embodiments.
Figure 6 illustrates the operation of the image processing application of Figure 5, according to various embodiments.
Figure 7 sets forth a flow diagram of method steps for processing an input image, according to various embodiments.
Figure 8 sets forth a flow diagram of method steps for performing inpainting associated with a sequence of images, according to various embodiments.

### DETAILED DESCRIPTION

In the following description, numerous specific details are set forth to provide a more thorough understanding of the various embodiments. However, it will be apparent to one of skill in the art that the inventive concepts may be practiced without one or more of these specific details.

Visual effects involves the creation, manipulation, or enhancement of images in the context of live-action video production or filmmaking. For example, computer-based visual effects tools can be used to remove objects, create three-dimensional (3D) animations, smooth video footage, composite visual elements from multiple sources into a single video stream, and/or otherwise generate or modify video frames.

However, many computer-based visual effects tools are inefficient and difficult to scale. For example, a visual effects artist could spend hours interacting with a visual effects application to remove wires, markers, production crew, and/or other objects from a shot or scene. During this process, the visual effects artist would need to manually select and configure a "rig removal" tool within the visual effects application to account for the size and shape of each object, the movement of each object, camera motion, backgrounds against which the objects are set, and/or other factors. Accordingly, a team of visual effects artists would be unable to apply visual effects quickly enough to support an increase in the amount of video content to which the visual effects are to be applied.

Further, many state-of-the-art visual effects techniques are designed to work with specific types of data. More specifically, many deep-learning-based image processing techniques that can be used to apply visual effects to video are developed for images that are eight bits per color channel. As a result, these techniques cannot be used with images or video with greater bit depths, such as professionally produced video that includes 16 or 32 bits per color channel.

To address the above shortcomings, the disclosed techniques divide a video frame with higher color depths into separate "partial" images, where each partial image has a color depth that is supported by a given image processing technique and stores a separate subset of bits in each pixel of the video frame. The image processing technique is separately applied to each partial image to generate a partial image processing result. The partial image processing results are then merged back into a combined image processing result that represents the application of a visual effect to the video frame. For example, a video frame with 16 bits per color channel could be divided into a first partial image that stores the eight most significant bits in the video frame and a second partial image that stores the eight least significant bits in the video frame. An inpainting and/or another image processing technique that is compatible with images that have eight bits per color channel can then be applied to each of the partial images to generate multiple partial image processing results. The partial image processing results are then combined with a set of weights into an overall image processing result that represents an inpainted version of the video frame.

To streamline the application of video effects to a given video, the disclosed techniques also automatically select an image processing technique for use with the video based on one or more attributes associated with the video. For example, a background motion could be calculated based on motion vectors associated with a sequence of video frames. When the background motion exceeds a threshold, an inpainting technique that includes a deep learning model could be selected. When the background motion does not exceed the threshold, an inpainting technique that includes a computer vision model could be selected. The selected inpainting technique can then be then applied to the video to remove an object from the video.

One technical advantage of the disclosed techniques relative to the prior art is that visual effects can be applied more efficiently to video content that varies in background motion and/or other attributes, unlike conventional approaches that require manual selection and/or configuration of visual effects tools to account for these attributes. Another technical advantage of the disclosed techniques is that various image processing techniques can be adapted for use with video content that has a higher color depth. Accordingly, the disclosed techniques improve the quality of the visual effects over conventional approaches that limit the color depth of videos that can be used with certain image processing techniques. These technical advantages provide one or more technological improvements over prior art approaches.

### System Overview

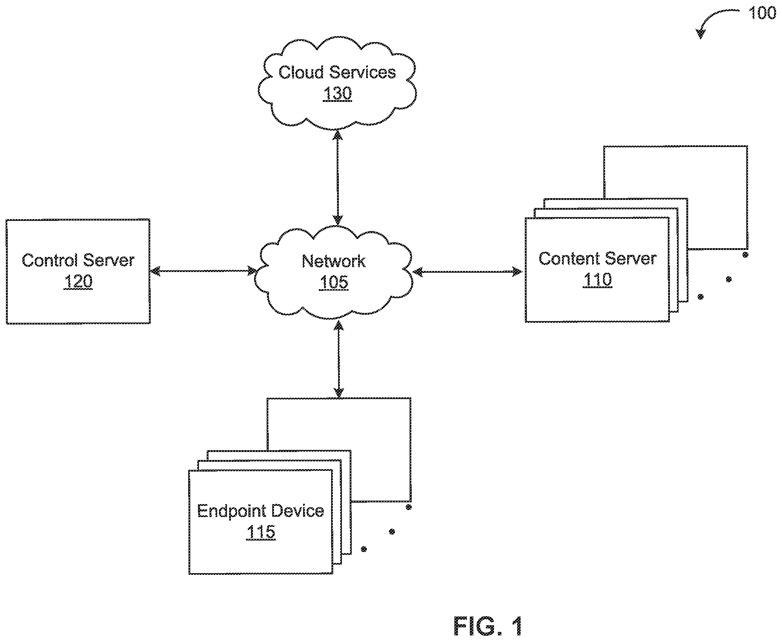

Figure 1 illustrates a network infrastructure configured to implement one or more aspects of the various embodiments. As shown, network infrastructure 100 includes one or more content servers 110, a control server 120, and one or more endpoint devices 115, which are connected to one another and/or one or more cloud services 130 via a communications network 105. Network infrastructure 100 is generally used to distribute content to content servers 110 and endpoint devices 115.

Each endpoint device 115 communicates with one or more content servers 110 (also referred to as "caches" or "nodes") via network 105 to download content, such as textual data, graphical data, audio data, video data, and other types of data. The downloadable content, also referred to herein as a "file," is then presented to a user of one or more endpoint devices 115. In various embodiments, endpoint devices 115 may include computer systems, set top boxes, mobile computer, smartphones, tablets, console and handheld video game systems, digital video recorders (DVRs), **DVD** players, connected digital TVs, dedicated media streaming devices, (e.g., the Roku^{®} set-top box), and/or any other technically feasible computing platform that has network connectivity and is capable of presenting content, such as text, images, video, and/or audio content, to a user.

Network 105 includes any technically feasible wired, optical, wireless, or hybrid network that transmits data between or among content servers 110, control server 120, endpoint device 115, cloud services 130, and/or other components. For example, network 105 could include a wide area network (WAN), local area network (LAN), personal area network (PAN), WiFi network, cellular network, Ethernet network, Bluetooth network, universal serial bus (USB) network, satellite network, and/or the Internet.

Each content server 110 may include one or more applications configured to communicate with control server 120 to determine the location and availability of various files that are tracked and managed by control server 120. Each content server 110 may further communicate with cloud services 130 and one or more other content servers 110 to "fill" each content server 110 with copies of various files. In addition, content servers 110 may respond to requests for files received from endpoint devices 115. The files may then be distributed from content server 110 or via a broader content distribution network. In some embodiments, content servers 110 may require users to authenticate (e.g., using a username and password) before accessing files stored on content servers 110. Although only a single control server 120 is shown in Figure 1, in various embodiments multiple control servers 120 may be implemented to track and manage files.

In various embodiments, cloud services 130 may include an online storage service (e.g., Amazon^{®} Simple Storage Service, Google^{®} Cloud Storage, etc.) in which a catalog of files, including thousands or millions of files, is stored and accessed in order to fill content servers 110. Cloud services 130 also may provide compute or other processing services. Although only a single instance of cloud services 130 is shown in Figure 1, in various embodiments multiple cloud services 130 and/or cloud service instances may be implemented.

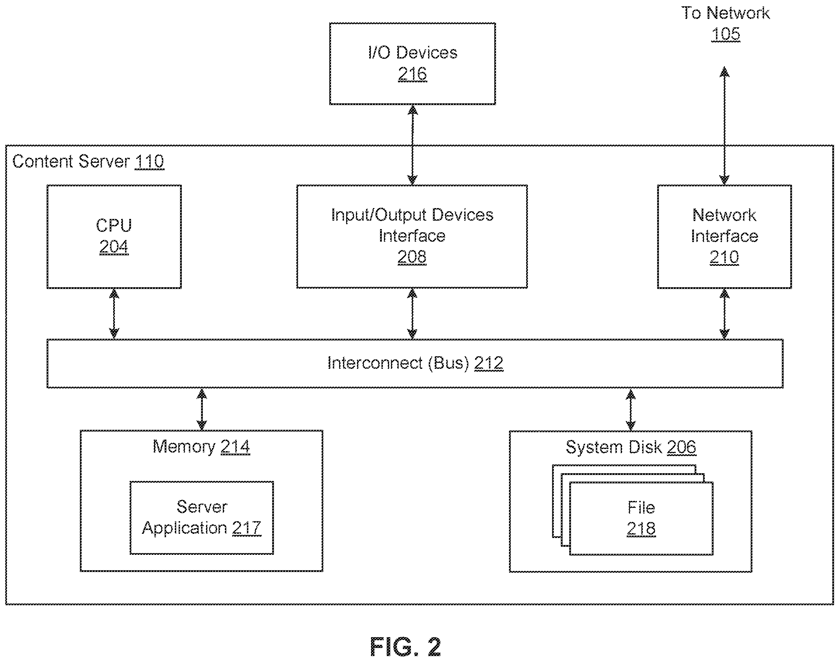

Figure 2 is a block diagram of content server 110 that may be implemented in conjunction with the network infrastructure of Figure 1, according to various embodiments. As shown, content server 110 includes, without limitation, a central processing unit (CPU) 204, a system disk 206, an input/output (I/O) devices interface 208, a network interface 210, an interconnect 212, and a system memory 214.

CPU 204 is configured to retrieve and execute programming instructions, such as a server application 217, stored in system memory 214. Similarly, CPU 204 is configured to store application data (e.g., software libraries) and retrieve application data from system memory 214. Interconnect 212 is configured to facilitate transmission of data, such as programming instructions and application data, between CPU 204, system disk 206, I/O devices interface 208, network interface 210, and system memory 214. I/O devices interface 208 is configured to receive input data from I/O devices 216 and transmit the input data to CPU 204 via interconnect 212. For example, I/O devices 216 may include one or more buttons, a keyboard, a mouse, and/or other input devices. I/O devices interface 208 is further configured to receive output data from CPU 204 via interconnect 212 and transmit the output data to I/O devices 216.

System disk 206 may include one or more hard disk drives, solid state storage devices, or similar storage devices. System disk 206 is configured to store non-volatile data such as files 218 (e.g., audio files, video files, subtitle files, application files, software libraries, etc.). Files 218 can then be retrieved by one or more endpoint devices 115 via network 105. In some embodiments, network interface 210 is configured to operate in compliance with the Ethernet standard.

System memory 214 includes server application 217, which is configured to service requests received from endpoint device 115 and other content servers 110 for one or more files 218. When server application 217 receives a request for a given file 218, server application 217 retrieves the requested file 218 from system disk 206 and transmits file 218 to an endpoint device 115 or a content server 110 via network 105. Files 218 include digital content items such as video files, audio files, and/or still images. In addition, files 218 may include metadata associated with such content items, user/subscriber data, etc. Files 218 that include visual content item metadata and/or user/subscriber data may be employed to facilitate the overall functionality of network infrastructure 100. In alternative embodiments, some or all of files 218 may instead be stored in a control server 120, or in any other technically feasible location within network infrastructure 100.

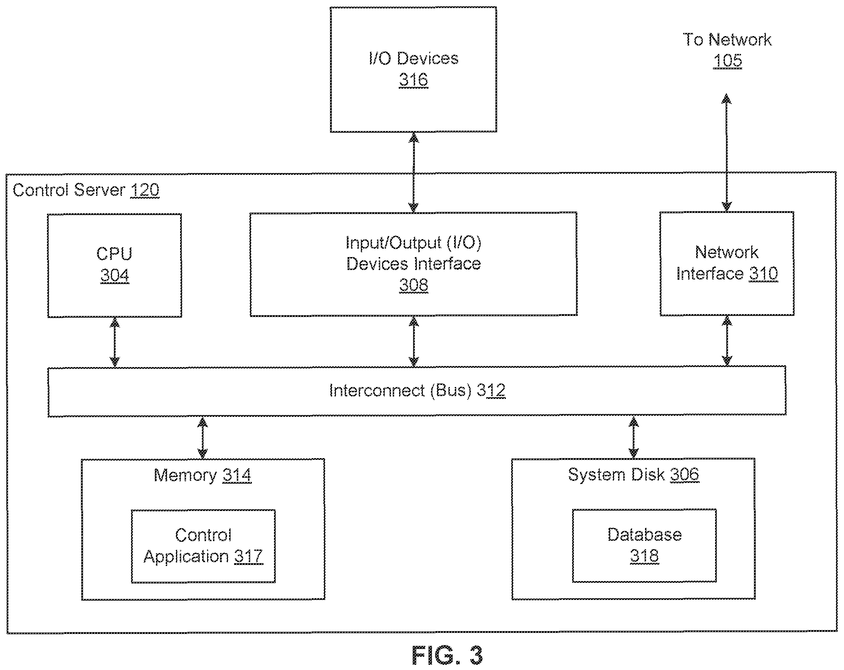

Figure 3 is a block diagram of control server 120 that may be implemented in conjunction with the network infrastructure 100 of Figure 1, according to various embodiments. As shown, control server 120 includes, without limitation, a central processing unit (CPU) 304, a system disk 306, an input/output (I/O) devices interface 308, a network interface 310, an interconnect 312, and a system memory 314.

CPU 304 is configured to retrieve and execute programming instructions, such as control application 317, stored in system memory 314. Similarly, CPU 304 is configured to store application data (e.g., software libraries) and retrieve application data from system memory 314 and a database 318 stored in system disk 306. Interconnect 312 is configured to facilitate transmission of data between CPU 304, system disk 306, I/O devices interface 308, network interface 310, and system memory 314. I/O devices interface 308 is configured to transmit input data and output data between I/O devices 316 and CPU 304 via interconnect 312. System disk 306 may include one or more hard disk drives, solid state storage devices, and the like. System disk 306 is configured to store a database 318 of information associated with content servers 110, cloud services 130, and files 218.

System memory 314 includes a control application 317 configured to access information stored in database 318 and process the information to determine the manner in which specific files 218 will be replicated across content servers 110 included in the network infrastructure 100. Control application 317 may further be configured to receive and analyze performance characteristics associated with one or more of content servers 110 and/or endpoint devices 115. As noted above, in some embodiments, metadata associated with such visual content items, and/or user/subscriber data may be stored in database 318 rather than in files 218 stored in content servers 110.

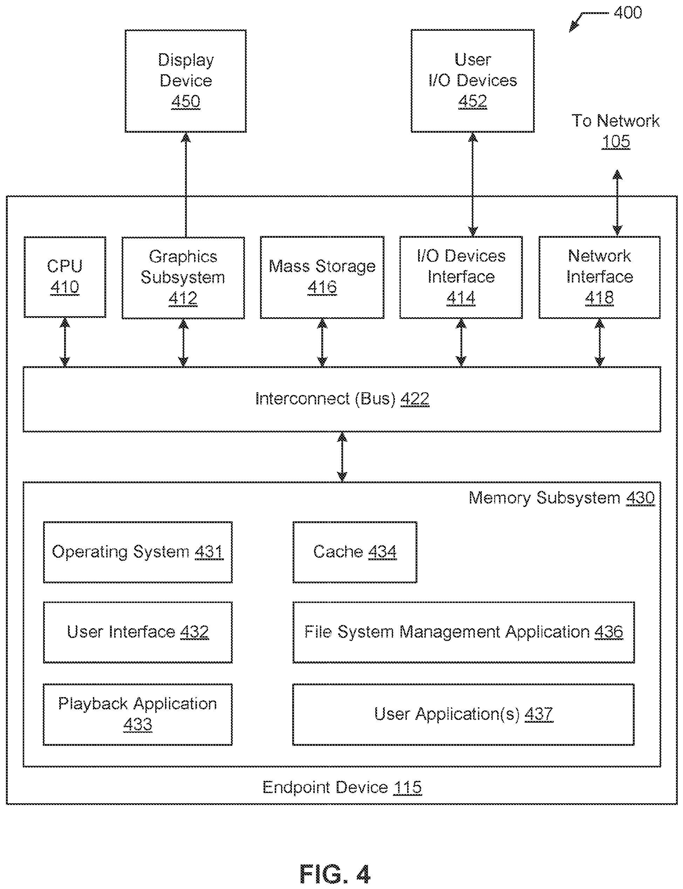

Figure 4 is a more detailed illustration of endpoint device 115 of Figure 1, according to various embodiments of the present invention. As shown, endpoint device 400 may include, without limitation, CPU 410, graphics subsystem 412, mass storage unit 414, I/O device interface 416, network interface 418, interconnect 422, memory subsystem 430, display device 450, and user I/O devices 452.

In some embodiments, CPU 410 is configured to retrieve and execute programming instructions stored in memory subsystem 430. Similarly, CPU 410 is configured to store and retrieve application data (e.g., software libraries) residing in the memory subsystem 430. Additionally or alternatively, CPU 410 is configured to store and retrieve data, including content items and/or application data, from mass storage unit 414. Interconnect 422 is configured to facilitate transmission of data, such as programming instructions and application data, between the CPU 410, graphics subsystem 412, mass storage unit 414, I/O devices interface 416, network interface 418, and memory subsystem 430.

Graphics subsystem 412 is configured to generate frames of video data and transmit the frames of video data to display device 450. In various embodiments, graphics subsystem 412 may be integrated, along with CPU 410, into an integrated circuit (IC). Display device 450 may comprise any technically-feasible means for generating an image for display. For example, display device 450 could be fabricated using liquid crystal display (LCD) technology, cathode-ray tube technology, and/or light-emitting diode (LED) display technology. In various embodiments, display device 450 may display one or more graphical user interfaces (GUIs).

Mass storage unit 414 can include, for example, a hard disk drive and/or flash-memory storage drive, and is configured to store nonvolatile data. For example, mass storage unit 414 could store one or more files 218, such as content items and/or application data. In various embodiments, endpoint device 115 may copy one or more files 218 stored in memory subsystem 430 (e.g., secure application data) to mass storage unit 414.

Input/output (I/O) device interface 416 is configured to receive input data from user one or more I/O devices 452 and transmit the input data to CPU 410 via interconnect 422. For example, user I/O device 452 may comprise one of more buttons, a keyboard, and a mouse or other pointing device. In various embodiments, I/O device interface 416 also includes an audio output unit configured to generate an electrical audio output signal. In such instances, user I/O device 452 may include an audio output device, such as headphones and/or a loudspeaker, configured to generate an acoustic output in response to the electrical audio input signal. Additionally or alternatively, display device 450 may include the loudspeaker. Examples of suitable devices known in the art that can display video frames and generate an acoustic output include televisions, smartphones, smartwatches, electronic tablets, etc.

Network interface 418 is configured to transmit and receive packets of data via network 105. In some embodiments, network interface 418 is configured to communicate using at least one of the Ethernet standard, the Bluetooth standard, and/or one or more wireless communication standards. Network interface 418 is coupled to CPU 410 via interconnect 422.

Memory subsystem 430 includes various portions of memory, programming instructions, and/or application data. In various embodiments, memory subsystem may include operating system 431, user interface 432, playback application 433, cache 434, replay files 435, FS management application 436, and user applications 437.

Operating system 431 performs system management functions, such as managing hardware devices including graphics subsystem 412, mass storage unit 414, I/O device interface 416, and network interface 418. Operating system 431 also provides process and memory management models for user interface 432, playback application 433, cache 434, and/or user applications 437. For example, endpoint device 115 may execute operating system 431 to write data to cache 434 and/or sync data included in cache 434 to mass storage unit 414.

User interface (UI) 432 provides a mechanism for user interaction with endpoint device 115. For example, UI 432 could include a graphical user interface (GUI) employing a window-and-object metaphor. Persons skilled in the art will recognize the various operating systems 431 and/or user interfaces 432 that are suitable for incorporation into endpoint device 115. In various embodiments, user interface 432 may present various files in a file system, including one or more objects stored in cloud services 130 and mounted as one or more files. In some embodiments, endpoint device 115 may execute a headless configuration that does not include UI 432.

Playback application 433 performs various playback functions associated with content items, such as displaying a GUI for content item selection and video playback of specific multimedia content items. The GUI employs a window-and-object metaphor to provide a mechanism for user interaction with endpoint device 115. Persons skilled in the art will recognize various operating systems and/or user interfaces that are suitable for incorporation into playback application 433. Playback application 433 is configured to request and/or receive content (e.g., one or more files 218) from content server 110 via network interface 418. Further, playback application 433 is configured to interpret the content and present the content via display device 450 and/or user I/O devices 452.

Cache 434 is a portion of volatile memory that stores files 218, such as content items, portions of retrieved objects, and/or application data (e.g., secure application data, metadata, etc.). In various embodiments, cache 434 may correspond to a section of nonvolatile memory. In some embodiments, endpoint device 115 may sync data between page cache 438 and mass storage unit 414 so that copies of data are stored in both cache 434 and mass storage unit 414.

File system (FS) management application 436 is a handler application that manages the access and processing of objects stored in cloud service(s) 130. In various embodiments, FS management application 436 may cause endpoint device 115 to mount the portion(s) of the objects as one or more files the in the file system of operating system 431 and may cause endpoint device 115 to retrieve at least a portion of an object when the mounted portion of the object is accessed. In various embodiments, FS management application 436 may cause endpoint device 115 to retrieve one or more portions of the object from cloud service 130 when the portion is not stored in cache 434 and/or mass storage unit 414. In various embodiments, FS management application 436 may schedule one or more portions of a stored object ("chunks") for retrieving to the memory (e.g., cache 434 and/or mass storage unit 414) of endpoint device 115.

User application(s) 437 include one or more applications that process and/or interact with objects stored in cloud service(s) 130. In various embodiments, user application 437 includes an application that processes video, such as a video editing application, visual effects tool, and/or encoding software (e.g., FFmpeg). During operation, user application 437 processes files that are accessible via the local file system and/or mass storage unit 414. As described in further detail below, user application 437 can also, or instead, retrieve the files from content server 100 and/or offload processing of the files to one or more cloud services 130.

### Visual Effects Processing Framework

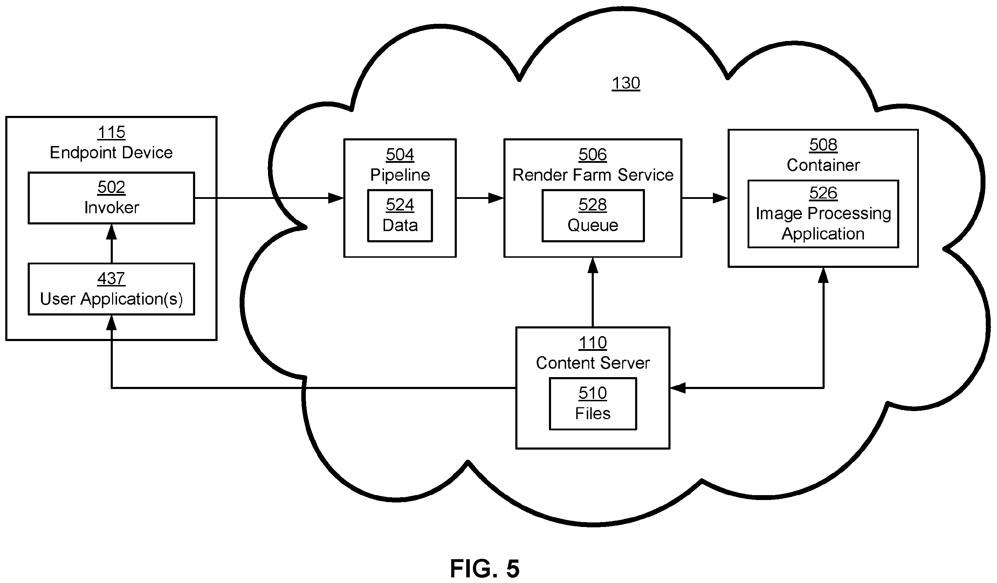

Figure 5 illustrates a system for performing visual effects processing, according to various embodiments. As shown in Figure 5, the system includes endpoint device 115 and a number of remote components that execute as cloud services 130. These components include a pipeline 504, a render farm service 506, a container 508, and content server 110. Each of these components is described in further detail below.

As described above, one or more user applications 437 executing on endpoint device 115 can be used to perform processing related to video. For example, user applications 437 could include a visual effects application, video editing application, video encoding application, and/or another type of application that is used to create and/or modify video frames.

In one or more embodiments, the system of Figure 5 is configured to offload certain types of video processing from user application 437 on endpoint device 115 to cloud services 130. For example, user application 437 could execute on a personal computer or workstation implementing endpoint device 115. During a rig removal workflow, the visual effects artist could interact with user application 437 executing locally on endpoint device 115 to specify parameters and/or other data 524 related to removal of an object from a video. User application 437 could transfer data 524 to cloud services 130, and cloud services 130 could use data 524 to execute a computationally intensive inpainting procedure that removes the object from the video. Cloud services 130 could also store one or more files 510 generated as output of the inpainting procedure in content server 110, and user application 437 could receive the generated files 510 from content server 110 and proceed with the remainder of the rig removal workflow.

More specifically, user application 437 initiates use of cloud services 130 via an invoker 502 on endpoint device 115. For example, invoker 502 could include a plugin associated with user application 437. A visual effects artist and/or another user could interact with the plugin to trigger a rendering job associated with the plugin. The plugin could validate data 524 associated with the rendering job and then call an application programming interface (API) associated with cloud services 130 to transfer data 524 from endpoint device to cloud services 130.

Next, pipeline 504 retrieves data 524 and submits a request that includes data 524 to render farm service 506. Render farm service 506 performs fair scheduling of rendering jobs from various instances of user application 437 across a distributed computing cluster. To this end, render farm service 506 adds data 524 to a queue 528 and subsequently dispatches the corresponding rendering job to an image processing application 526 running in a given container 508 within the distributed computing cluster. Render farm service 506 can also retrieve metadata for video and/or other files 510 related to the rendering job from content server 110 and transmit the metadata to image processing application 526.

Image processing application 526 uses the metadata from render farm service 506 to download video frames and/or other files 510 related to the rendering job from content server 110. Image processing application 526 also executes the rendering job on one or more graphics processing units (GPUs) and/or GPU cores and uploads video and/or other files 510 outputted by the rendering job to content server 110. Finally, user application 437 automatically downloads the outputted files 510 from content server 110 to endpoint device 115, thereby allowing the user of endpoint device 115 to view and/or perform additional processing related to files 510.

While the job is processed by cloud services 130, the user of endpoint device 115 is able to perform other types of processing via user application 437. As a result, the system of Figure 5 increases the efficiency with which image processing and/or visual effects workflows are carried out via user application 437 and endpoint device 115. Further, the use of cloud services 130 to schedule and/or execute rendering jobs from multiple endpoint devices allows a given set of computational, network, and/or other resources to be shared by a much larger number of users. Because these resources can be dynamically provisioned, the operation of image processing application 526 can be adapted to rendering jobs of varying complexity, the number of rendering jobs, and/or the sizes of the rendering jobs.

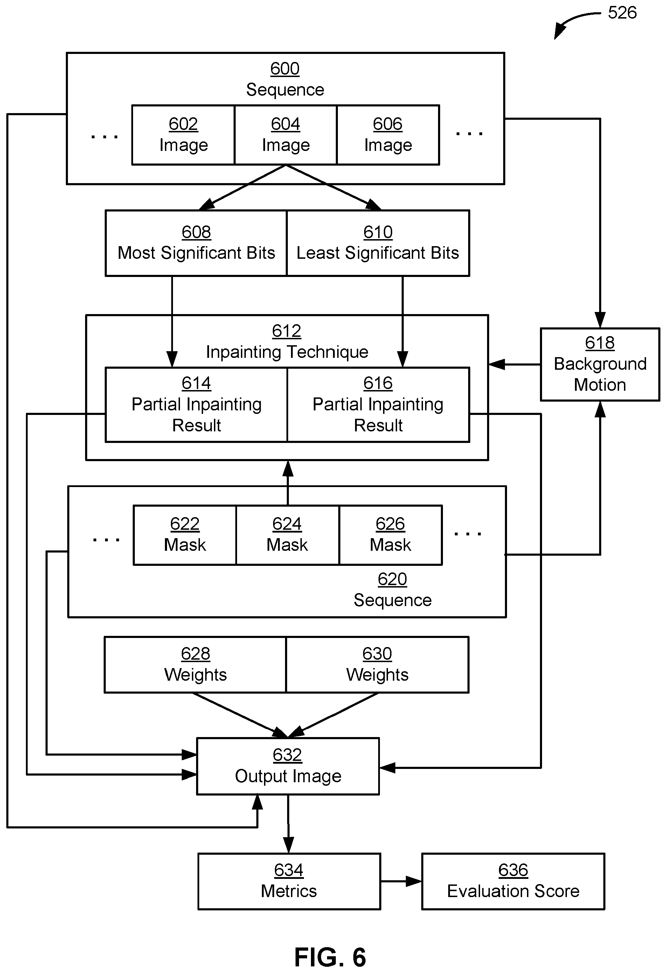

Figure 6 illustrates the operation of image processing application 526 of Figure 5, according to various embodiments. More specifically, Figure 6 illustrates the operation of image processing application 526 in using an inpainting technique 612 to remove an object (or another region of pixels) from an image 604 included in a sequence 600 of images 602-606 (e.g., a sequence of frames in a video).

As shown in Figure 6, input into image processing application 526 includes images 602-606 in sequence 600, as well as a corresponding sequence 620 of masks 622-626 that specify the locations of the object (or region) to be removed in each of images 602-606. For example, a user of endpoint device 115 could provide an identifier or location for sequence 600. The user could also generate masks 622-626 in sequence 620 and/or specify an identifier or location for sequence 620. Image processing application 526 could use the identifiers and/or locations of sequences 600 and 620 and/or other metadata from the user or render farm service 506 to download files 510 storing sequences 600 and 620 from content server 110.

In some embodiments, each mask 622-626 in sequence 620 is the same size as a corresponding image 602-606 in sequence 600. Within a given mask 622-626, a pixel is set to 1 when the pixel corresponds to an object or region to be removed from the corresponding image 602-606 and is set to 0 otherwise.

In some embodiments, image processing application 526 performs morphological pre-processing of masks 622-626 in sequence 620. For example, image processing application 526 could use one or more dilation operations to remove "holes" from each mask 622-626.

Image processing application 526 generates an output image 632 for each image 602-606 in sequence 600 based on the corresponding mask 622-626 in sequence 620. For example, image processing application 526 could generate a first output image 632 for image 604 based on mask 624. Image processing application 526 could also generate a second output image (not shown) for image 602 based on mask 622 and a third output image (not shown) for image 606 based on mask 626. Each output image includes content from a corresponding image in sequence 600 that is associated with a pixel value of 0 in the mask for the image. Each output image also includes content that has been generated by image processing application 526 as a replacement for an object or region that is associated with a pixel value of 1 in the mask for the image. Consequently, image processing application 526 can be used to remove rigs, objects, artifacts, and/or other regions from each image 602-606 and replace those regions with background from other images in sequence 600 and/or synthesized content.

In one or more embodiments, image processing application 526 accounts for discrepancies between the color depth of images 602-606 in sequence 600 and the color depth that is compatible with inpainting technique 612. For example, image processing application 526 could use a given inpainting technique 612 that operates on images with an eight-bit color depth (i.e., eight bits per color channel) with images 602-606 that have a 16-bit color depth (i.e., 16 bits per color channel).

As shown in Figure 6, image processing application 526 divides image 604 into a set of most significant bits 608 and a set of least significant bits 610. Continuing with the above example, image processing application 526 would divide the 16 bits per color channel in image 604 into a set of eight most significant bits 608 (i.e., the eight highest bits) from each pixel in image 604 and a set of eight least significant bits 610 (i.e., the eight lowest bits) from each pixel in image 604. Image processing application 526 could store most significant bits 608 in a first partial image with an eight-bit color depth and least significant bits 610 in a second partial image with an eight-bit color depth. The first partial image would store high-frequency components of image 604, and the second partial image would store low-frequency components of image 602.

After image 604 is divided into one set of most significant bits 608 and another set of least significant bits 610, image processing application 526 optionally applies a color transformation to each set of bits. For example, image processing application 526 could use a lookup table to convert each red, green, and blue pixel value to a corresponding pixel value. This conversion of pixel values would "translate" the pixel values into a color space in which image processing application 526 operates.

Next, image processing application 526 selects a particular inpainting technique 612 to use with image 604 based on background motion 618 associated with the object to be removed from images 602-606 in sequence 600. For example, image processing application 526 could use an optical flow estimation technique to compute motion vectors between pairs of adjacent images 602-606 in sequence 600. Image processing application 526 could then calculate background motion 618 as an average and/or another aggregation of the magnitude of the motion vectors across some or all pairs of images 602-606 in sequence 600.

After background motion 618 associated with sequence 600 is determined (e.g., as motion vectors between pairs of images 602-606 in sequence 600), image processing application 526 selects inpainting technique 612 to be used with image 604 based on one or more thresholds for background motion 618. For example, image processing application 526 could select a first inpainting technique that includes a deep learning model when background motion 618 exceeds a threshold (e.g., 0.2). Conversely, image processing application 526 could select a second inpainting technique that includes one or more computer vision models when background motion 618 does not exceed the threshold.

In one or more embodiments, the deep learning model included in the first inpainting technique 612 is trained to copy content from reference frames into a target frame. Input into the deep learning model includes a sequence of video frames (e.g., sequence 600) and a region of pixels in each video frame to be filled in (e.g., sequence 620). The deep learning model processes the frames in temporal order within the sequence. During processing of a given "target" frame, the deep learning model fills in the corresponding region of pixels with content from the remaining "reference" frames in the sequence.

More specifically, the deep learning model includes an alignment network that estimates affine matrices that are used to align each reference frame with a given target frame. The deep learning model also includes a copy network that includes an encoder and a context matching module. The encoder extracts features from the target frame and the aligned reference frames, and the context matching module aggregates features from the aligned reference frames based on the "importance" of each pixel in the reference frames and generates a mask indicating pixels in the region that are not visible in any of the reference frames. Finally, the deep learning model includes a decoder network that generates a "filled in" (i.e., inpainted) target frame, given the target features from the encoder and the aggregated reference features and mask from the context matching module. The decoder copies content from the reference frames to the corresponding pixels in the target frame and also synthesizes content for pixels in the region that are not visible in any of the reference frames. Because the frames are inpainted in temporal order within the sequence, each completed frame is used as a reference for subsequent target frames in the sequence, thereby improving the temporal consistency of the inpainted frames. The deep learning model can additionally be used to reprocess the inpainted frames in reverse temporal order to further enhance the temporal consistency of the inpainted frames.

The deep learning model included in the first inpainting technique 612 also, or instead, includes a spatial-temporal transformer network (STTN). Input into the STTN includes a given sequence of frames (e.g., sequence 600) and a corresponding sequence of masks (e.g., sequence 620). The STTN simultaneously fills in all frames in the sequence by searching content from the frames along both spatial and temporal dimensions using a multi-scale patch-based attention module. The multi-scale patch-based attention module extracts patches of different scales from all frames to account for appearance changes caused by complex motion. Different transformer heads of the STTN calculate similarities between spatial patches across the different scales, and attention results from the transformer heads are aggregated to detect and transform the most relevant patches for the regions identified in the masks. The transformers can additionally be stacked to repeat the inpainting process based on updated region features.

In some embodiments, the computer vision model included in the second inpainting technique is used to remove an object from a target frame included in a sequence of video frames (e.g., sequence 600), given a mask (e.g., masks 622-626) that identifies a region to be "filled in" in the target frame. The computer vision model performs homography-based alignment between the target frame and a set of source frames in the same sequence. The region is then filled in using parts of the aligned source frames based on a cost function that is globally minimized.

The computer vision model included in the second inpainting technique also, or instead, performs inpainting of a given frame in a sequence using a registration step and a hole-filling step. The registration step performs region-based alignment of neighboring source frames with a target frame. During the region-based alignment, a given source frame is segmented into homogeneous regions using a mean-shift technique, and a homography transformation is estimated for mapping each region of the source frame into the target frame. After the neighboring source frames are aligned with the target frame, the region in the target frame is inpainted using the best collocated pixel value in the source frames. This best collocated pixel value is determined by using an expansion-move technique to minimize a cost function defined over all pixels in the region.

After inpainting technique 612 is selected, image processing application 526 inputs most significant bits 608 and mask 624 into inpainting technique 612 to generate a first partial inpainting result 614. Image processing application 526 separately inputs least significant bits 610 and mask 624 into the same inpainting technique 612 to generate a second partial inpainting result 616. Partial inpainting result 614 thus includes high-frequency components related to the removal of the object (or region) from image 604, and partial inpainting result 616 includes low-frequency components related to the removal of the object (or region) from image 604.

Image processing application 526 then combines partial inpainting results 614-616 with a corresponding set of weights 628-630 into output image 632. More specifically, image processing application 526 multiplies partial inpainting result 614 with one or more corresponding weights 628. Image processing application 526 also multiplies partial inpainting result 616 with a separate set of one or more corresponding weights 630. Image processing application 526 then concatenates the weighted partial inpainting results 614-616 into output image 632, so that the color depth of output image 632 is the same as the color depth of the original image 604 and is also equal to the sum of the color depths of inpainting results 614-616.

In one or more embodiments, weights 628-630 include parameters that are provided by a visual effects artist and/or another user associated with image processing application 526. For example, the provided weights 628-630 could include a first weight that is used to scale all pixel values in partial inpainting result 614 and a second weight that is used to scale all pixel values in partial inpainting result 616. Consequently, the first weight would be used to adjust the contributions of high-frequency components in partial inpainting result 614 to the final output image 632, and the second weight would be used to adjust the contributions of low-frequency components in partial inpainting result 616 to the final output image 632.

When partial inpainting results 614-616 have a lower resolution than the original image 604 (e.g., when a selected inpainting technique 612 generates partial inpainting results 614-616 at a resolution that is lower than image 604), image processing application 526 upsamples partial inpainting results 614-616 to match the resolution of image 604. Image processing application 526 uses mask 624 to merge the upsampled partial inpainting result 614 with most significant bits 608 from image 604 to generate a first merged image. Image processing application 526 similarly uses mask 624 to merge the upsampled partial inpainting result 616 with least significant bits 610 from image 604 to generate a second merged image. The first merged image includes pixel values from the upsampled partial inpainting result 614 that correspond to values of 1 in mask 624 and pixel values from most significant bits 608 that correspond to values of 0 in mask 624. The second merged image includes pixel values from the upsampled partial inpainting result 616 that correspond to values of 1 in mask 624 and pixel values from least significant bits 610 that correspond to values of 0 in mask 624. Image processing application 526 then generates output image 632 as a concatenation of a first combination of the first merged image with one or more weights 628 associated with most significant bits 608 and a second combination of the second merged image with one or more weights 630 associated with least significant bits 610.

After output image 632 is generated, image processing application 526 computes a set of metrics 634 that measure different aspects of the inpainting result represented by output image 632. Image processing application 526 also aggregates metrics 634 into an evaluation score 636 that represents the overall inpainting performance associated with output image 632. For example, image processing application 526 could calculate a peak signal to noise ratio, structural similarity index measure, learned perceptual image patch similarity, average warp error, video Frechet inception distance, and/or other metrics 634 between one or more regions of output image 632 and one or more corresponding regions of the original image 604 and/or across multiple output images generated from images 602-606 in sequence 600. Image processing application 526 could then generate evaluation score 636 as a weighted combination of the calculated metrics 634. Weights used in the weighted combination could be determined using a regression technique that estimates the relationships between metrics 634 and subjective evaluation scores provided by visual effects artists and/or other users.

Image processing application 526 provides output image 632, metrics 634, and/or evaluation score 636 to a visual effects artist and/or another user for which output image 632 was generated. For example, image processing application 526 could upload output image 632, metrics 632, and/or evaluation score 636 to content server 110. User application 437 on a given endpoint device 115 used by the user could then download image 632, metrics 632, and/or evaluation score 636 from content server 110 and output image 632, metrics 632, and/or evaluation score 636 to the user.

The user can use image 632, metrics 632, and/or evaluation score 636 to assess the inpainting performance associated with output image 632 and perform actions based on the assessed inpainting performance. For example, if output image 632, metrics 634, and/or evaluation score 636 indicate that the inpainting performance associated with output image 632 is adequate or good, the user could submit output image 632 as a "completed" inpainting result for image 604 and/or proceed with additional processing related to output image 632. If output image 632, metrics 634, and/or evaluation score 636 indicate suboptimal inpainting performance associated with output image 632, the user could adjust weights 638-630, masks 622-626, and/or other parameters that affect the inpainting of image 604. The user could also, or instead, manually select a specific inpainting technique 612 to be used with image 604. The user could then use image processing application 526 to regenerate output image 632 with the specified parameters and/or inpainting technique 612 and use the corresponding metrics 634 and/or evaluation score 636 to re-evaluate the corresponding inpainting performance. Thus, metrics 634 and/or evaluation score 636 can be used as guides for evaluating the inpainting performance associated with a given output image 632 and/or adjusting parameters that can affect the inpainting performance.

While the operation of image processing application 526 has been described above with respect to cloud services 130, those skilled in the art will appreciate that image processing application 526 can execute in other environments or contexts. For example, image processing application 526 could execute on a single endpoint device 115 that is used by a visual effects artist and/or another user to process images and/or video. In another example, one or more instances of image processing application 526 could execute on a cluster that removes objects from a "batch" of videos, given corresponding sequences of masks that identify the locations of the objects in the videos.

Further, the operation of image processing application 526 can be adapted to accommodate other bit depths associated with images and/or image processing techniques. For example, image processing application 526 could divide a video frame with a 32-bit color depth into four partial images. Each of the four partial images stores eight consecutive bits per pixel from the video frame. Image processing application 526 could select inpainting technique 612 based on background motion 618 associated with the video in which the video frame is included and use inpainting technique 612 to generate four different partial inpainting results from the four images. Image processing application 526 could then combine the four partial inpainting results with four corresponding weights into an output image with 32 bits per color channel.

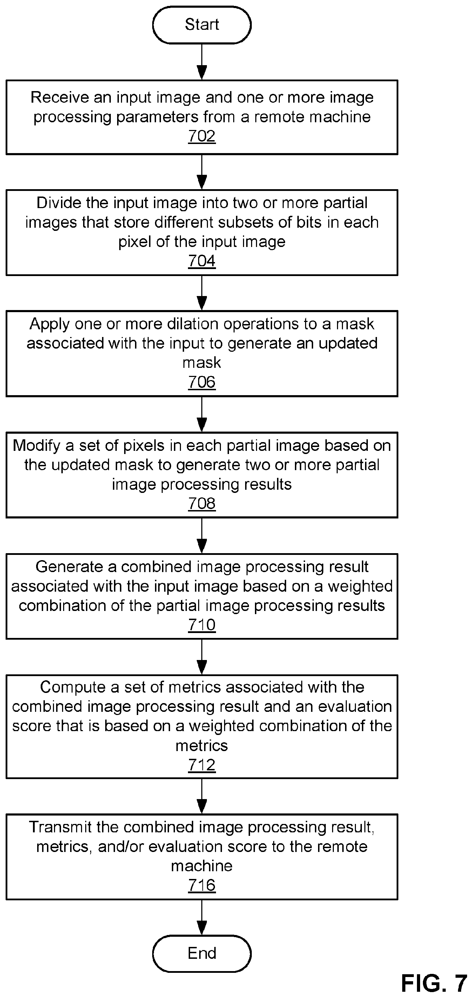

Figure 7 sets forth a flow diagram of method steps for processing an input image, according to various embodiments. Although the method steps are described in conjunction with the systems of Figures 1-6, persons skilled in the art will understand that any system configured to perform the method steps, in any order, is within the scope of the present invention.

As shown, image processing application 526 receives 702 an input image and one or more image processing parameters from a remote machine. For example, image processing application 526 could download a video file that includes the input image from content server 110 and/or another remote source. Image processing application 526 could also receive the image processing parameter(s) from endpoint device 115 and/or one or more cloud services 130. The image processing parameter(s) could include weights associated with various subsets of bits in individual pixels of the input image, a mask associated with the input image, an image processing technique to be applied to the input image, a lookup table used to transform colors in the image, and/or other values that affect the processing of the input image by image processing application 526.

Next, image processing application 526 divides 704 the input image into two or more partial images that store different subsets of bits in each pixel of the input image. For example, image processing application 526 could divide an input image with 16 bits per color channel into two partial images that each store half of the bits per color channel. The first partial image would store the eight most significant bits in the input image, and the second partial image would store the eight least significant bits in the input image.

Image processing application 526 applies 706 one or more dilation operations to a mask associated with the input to generate an updated mask. For example, image processing application 526 could use a morphological operator with a 3x3 pixel window to dilate the mask, thereby removing "holes" in the mask.

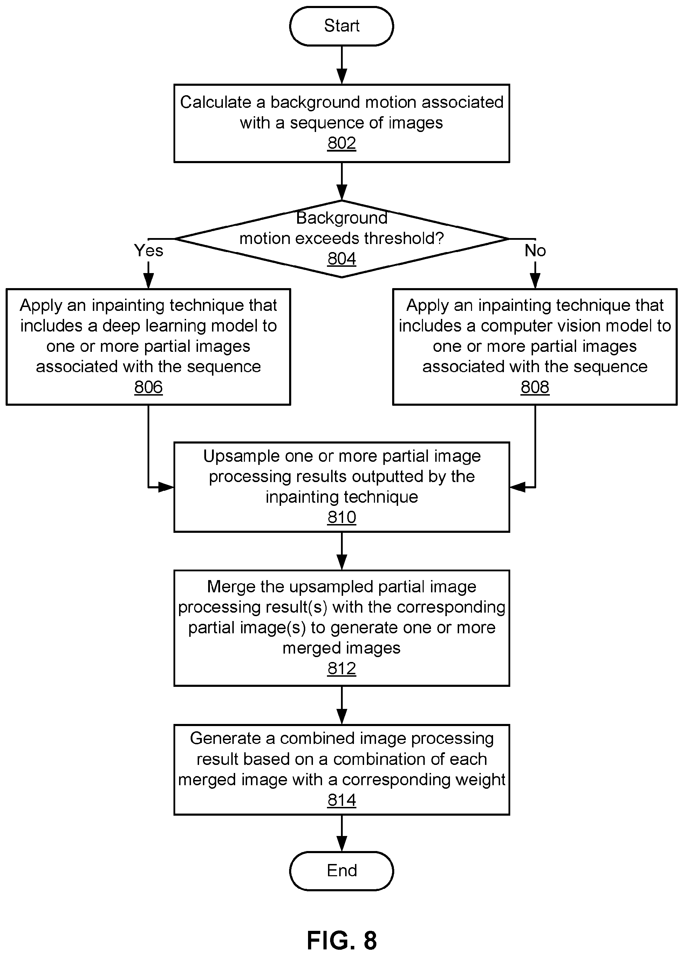

Image processing application 526 also modifies 708 a set of pixels in each partial image based on the updated mask to generate two or more partial image processing results. Image processing application 526 then generates 710 a combined image processing result associated with the input image based on a weighted combination of the partial image processing results. For example, image processing application 526 could use an inpainting technique to generate a separate partial inpainting result for each of two partial images into which the input image was divided. Image processing application 526 could then scale each partial inpainting result by a corresponding weight received in operation 702 and concatenated the scaled partial inpainting results to produce the combined image processing result. The use of an inpainting technique to generate partial image processing results and a combined image processing result is described in further detail below with respect to Figure 8.

Image processing application 526 additionally computes 712 a set of metrics associated with the combined image processing result and an evaluation score that is based on a weighted combination of the metrics. For example, image processing application 526 could compute a peak signal to noise ratio, a structural similarity index measure, a learned perceptual image patch similarity, an average warp error, a video Frechet inception distance, and/or another metric associated with a combined image processing result that includes an inpainted portion of the input image. Image processing application 526 could then combine the metrics with a corresponding set of weights into an evaluation score that represents the overall inpainting performance associated with the combined image processing result.

Finally, image processing application 526 transmits 714 the combined image processing result, metrics, and/or evaluation score to the remote machine. For example, image processing application 526 could upload the combined image processing result, metrics, and/or evaluation score in one or more files to content server 110, and endpoint device 115 could download the files from content server 110. A user of endpoint device 115 could then review the content of the files, perform additional processing related to the input image and/or the combined image processing result, generate a different combined image processing result for the input image using a different set of image processing parameters, and/or perform other operations associated with the combined image processing result, metrics, and/or evaluation score.

Figure 8 sets forth a flow diagram of method steps for performing inpainting associated with a sequence of images, according to various embodiments. Although the method steps are described in conjunction with the systems of Figures 1-6, persons skilled in the art will understand that any system configured to perform the method steps, in any order, is within the scope of the present invention.

As shown, image processing application 526 calculates 802 a background motion associated with a sequence of images (e.g., a video). For example, image processing application 526 could use an optical flow estimation technique to estimate motion vectors between one or more pairs of images in the sequence. Image processing application 526 could then calculate the background motion as the average and/or another aggregation of the magnitude of the motion vectors.

Next, image processing application 526 applies an inpainting technique to one or more partial images associated with the sequence based on a comparison 804 of the background motion to a threshold. If the background motion exceeds the threshold, image processing application 526 applies 806 an inpainting technique that includes a deep learning model to the partial image(s). If the background motion does not exceed the threshold, image processing application 526 applies 808 an inpainting technique that includes a computer vision model to the partial image(s).

Image processing application 526 then upsamples 810 one or more partial image processing results outputted by the inpainting technique. For example, image processing application 526 could upsample each partial image processing result to match a resolution of a corresponding image in the sequence.

Image processing application 526 also merges 812 the upsampled partial image processing result(s) with the corresponding partial image(s) to generate one or more merged images. For example, image processing application 526 could use a mask associated with each partial image to generate a merged image that includes a subset of pixels from the partial image and a different subset of pixels from the corresponding upsampled partial image processing result. The subset of pixels from the partial image would correspond to pixel values of 0 in the mask, and the subset of pixels from the corresponding upsampled partial image processing result would correspond to pixel values of 1 in the mask.

Finally, image processing application 526 generates 824 a combined image processing result based on a combination of each merged image with a corresponding weight. For example, image processing application 526 could scale each merged image by the corresponding weight and concatenate the scaled merged images into an output image corresponding to the combined image processing result.

In sum, a visual effects processing framework streamlines the application of video effects to a given video. First, the visual effects processing framework allows image processing techniques that are designed for use with a certain color depth to be applied to images with a higher color depth by dividing each image into multiple partial images that store different disjoint subsets of bits in each pixel. For example, a video frame with 16 bits per color channel could be divided into a first partial image that stores the eight most significant bits in the video frame and a second partial image that stores the eight least significant bits in the video frame. An inpainting and/or another image processing technique that is compatible with images that have eight bits per color channel can then be applied to each of the partial images to generate multiple partial image processing results. The partial image processing results are then combined with a set of weights into an overall image processing result that represents an inpainted version of the video frame.

The visual effects processing framework also automatically selects an image processing technique for use with the video based on one or more attributes associated with the video. For example, a background motion could be calculated for a sequence of video frames. When the background motion exceeds a threshold, an inpainting technique that includes a deep learning model could be selected. When the background motion does not exceed the threshold, an inpainting technique that includes a computer vision model could be selected. The selected inpainting technique can then be then applied to the video to remove an object from the video.

One technical advantage of the disclosed techniques relative to the prior art is that visual effects can be applied more efficiently to video content that varies in background motion and/or other attributes, unlike conventional approaches that require manual selection and/or configuration of visual effects tools to account for these attributes. Another technical advantage of the disclosed techniques is that various image processing techniques can be adapted for use with video content that has a higher color depth. Accordingly, the disclosed techniques improve the quality of the visual effects over conventional approaches that limit the color depth of videos that can be used with certain image processing techniques. These technical advantages provide one or more technological improvements over prior art approaches.

The invention to which this European patent is directed is defined in the appended claims.

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s).

While the preceding is directed to embodiments of the present disclosure, other and further embodiments of the disclosure may be devised without departing from the basic scope thereof, and the scope thereof is determined by the claims that follow.

## Claims

1. A computer-implemented method, comprising:
dividing (704) an input image into a first partial image and a second partial
image, wherein the first partial image stores a first subset of bits in each pixel of the input image and the second partial image stores a second subset of bits that is disjoint from the first subset of bits in each pixel of the input image;
wherein dividing the input image into the first partial image and the second partial image comprises:
storing a set of most-significant bits from each pixel in the input image in the first partial image; and
storing a set of least-significant bits from each pixel in the input image in the second partial image;
modifying (708) a first set of pixels in the first partial image to generate a first partial image processing result;
modifying (708) a second set of pixels in the second partial image to generate a second partial image processing result; and
generating (710) a combined image processing result associated with the input image based on a combination of the first partial image processing result, the second partial image processing result, a first weight associated with the first subset of bits, and a second weight associated with the second subset of bits;
wherein generating the first partial image processing result and the second partial image processing result comprises:
determining an inpainting technique based on a background motion associated with a sequence of images that includes the input image; and
applying the inpainting technique to the sequence of images to generate the first partial image processing result and the second partial image processing result.

2. The computer-implemented method of claim 1, further comprising:
applying (706) one or more dilation operations to a third set of pixels in a mask associated with the input image to generate an updated mask; and
generating (708) the first partial image processing result and the second partial image processing result based on the updated mask.

3. The computer-implemented method of claim 2, wherein generating the first partial image processing result and the second partial image processing result based on the updated mask comprises:
determining a target region of the input image based on the updated mask;
modifying the first set of pixels corresponding to the target region to generate the first partial image processing result; and
modifying the second set of pixels corresponding to the target region to generate the second partial image processing result.

4. The computer-implemented method of any preceding claim, wherein determining the inpainting technique comprises:
selecting a first inpainting technique that includes a deep learning model when the background motion exceeds a threshold; and
selecting a second inpainting technique that includes a computer vision model when the background motion does not exceed the threshold.

5. The computer-implemented method of claim 1, wherein generating the combined image processing result comprises:
merging the first partial image processing result with the first partial image to generate a first merged image;
merging the second partial image processing result with the second partial image to generate a second merged image; and
generating the combined image processing result based on a first combination of the first weight and the first merged image and a second combination of the second weight and the second merged image.

6. The computer-implemented method of any preceding claim, wherein
generating the combined image processing result further comprises upsampling the first partial image processing result and the second partial image processing result to match a resolution of the input image prior to generating the first merged image and the second merged image.

7. The computer-implemented method of claim 1, further comprising:
receiving the input image and one or more image processing parameters associated with the combined image processing result from a remote machine; and
after the combined image processing result is generated based on the input image and the one or more image processing parameters, transmitting the combined image processing result to the remote machine.

8. The computer-implemented method of any preceding claim, wherein each of the set of most-significant bits and the set of least-significant bits comprises half of the bits in each pixel of the input image.

9. A computer program product storing instructions that, when executed by one or more processors, cause the one or more processors to perform the method of any preceding claim.

10. A system, comprising:
one or more memories that store instructions, and
one or more processors that are coupled to the one or more memories and, when executing the instructions, are configured to carry out the method of any of claims 1 to 8.

## Patentansprüche

1. Computerimplementiertes Verfahren, das Folgendes umfasst:
Aufteilen (704) eines Eingangsbildes in ein erstes Teilbild und ein zweites Teilbild, wobei das erste Teilbild eine erste Teilmenge von Bits in jedem Pixel des Eingabebildes speichert und das zweite Teilbild eine zweite Teilmenge von Bits speichert, die disjunkt von der ersten Teilmenge von Bits in jedem Pixel des Eingangsbildes ist;
wobei das Aufteilen des Eingangsbildes in das erste Teilbild und das zweite Teilbild Folgendes umfasst:
Speichern eines Satzes höchstwertiger Bits von jedem Pixel in dem Eingabebild in dem ersten Teilbild; und
Speichern eines Satzes niedrigstwertiger Bits von jedem Pixel in dem Eingabebild in dem zweiten Teilbild;
Modifizieren (708) eines ersten Satzes von Pixeln in dem ersten Teilbild, um ein erstes Teilbildverarbeitungsergebnis zu erzeugen;
Modifizieren (708) eines zweiten Satzes von Pixeln in dem zweiten Teilbild, um ein zweites Teilbildverarbeitungsergebnis zu erzeugen; und
Erzeugen (710) eines kombinierten Bildverarbeitungsergebnisses, das mit dem Eingabebild assoziiert ist, basierend auf einer Kombination des ersten Teilbildverarbeitungsergebnisses, des zweiten Teilbildverarbeitungsergebnisses, eines ersten Gewichts, das mit der ersten Teilmenge von Bits assoziiert ist, und eines zweiten Gewichts, das mit der zweiten Teilmenge von Bits assoziiert ist;
wobei das Erzeugen des ersten Teilbildverarbeitungsergebnisses und des zweiten Teilbildverarbeitungsergebnisses Folgendes umfasst:
Bestimmen einer Inpainting-Technik basierend auf einer Hintergrundbewegung, die mit einer Sequenz von Bildern assoziiert ist, die das Eingabebild beinhaltet; und
Anwenden der Inpainting-Technik auf die Sequenz von Bildern, um das erste Teilbildverarbeitungsergebnis und das zweite Teilbildverarbeitungsergebnis zu erzeugen.

2. Computerimplementiertes Verfahren nach Anspruch 1, das ferner Folgendes umfasst:
Anwenden (706) einer oder mehrerer Dilatationsoperationen auf einen dritten Satz von Pixeln in einer Maske, die mit dem Eingabebild assoziiert ist, um eine aktualisierte Maske zu erzeugen; und
Erzeugen (708) des ersten Teilbildverarbeitungsergebnisses und des zweiten Teilbildverarbeitungsergebnisses basierend auf der aktualisierten Maske.

3. Computerimplementiertes Verfahren nach Anspruch 2, wobei das Erzeugen des ersten Teilbildverarbeitungsergebnisses und des zweiten Teilbildverarbeitungsergebnisses basierend auf der aktualisierten Maske Folgendes umfasst:
Bestimmen eines Zielgebiets des Eingabebildes basierend auf der aktualisierten Maske;
Modifizieren des ersten Satzes von Pixeln, die dem Zielgebiet entsprechen, um das erste Teilbildverarbeitungsergebnis zu erzeugen; und
Modifizieren des zweiten Satzes von Pixeln, die dem Zielgebiet entsprechen, um das zweite Teilbildverarbeitungsergebnis zu erzeugen.

4. Computerimplementiertes Verfahren nach einem vorhergehenden Anspruch, wobei das Bestimmen der Inpainting-Technik Folgendes umfasst:
Auswählen einer ersten Inpainting-Technik, die ein Tiefes-Lernen-Modell beinhaltet, wenn die Hintergrundbewegung eine Schwelle überschreitet; und
Auswählen einer zweiten Inpainting-Technik, die ein Computer-Vision-Modell beinhaltet, wenn die Hintergrundbewegung die Schwelle nicht überschreitet.

5. Computerimplementiertes Verfahren nach Anspruch 1, wobei das Erzeugen des kombinierten Bildverarbeitungsergebnisses Folgendes umfasst:
Zusammenführen des ersten Teilbildverarbeitungsergebnisses mit dem ersten Teilbild, um ein erstes zusammengeführtes Bild zu erzeugen;
Zusammenführen des zweiten Teilbildverarbeitungsergebnisses mit dem zweiten Teilbild, um ein zweites zusammengeführtes Bild zu erzeugen; und
Erzeugen des kombinierten Bildverarbeitungsergebnisses basierend auf einer ersten Kombination des ersten Gewichts und des ersten zusammengeführten Bildes und einer zweiten Kombination des zweiten Gewichts und des zweiten zusammengeführten Bildes.

6. Computerimplementiertes Verfahren nach einem vorhergehenden Anspruch, wobei das Erzeugen des kombinierten Bildverarbeitungsergebnisses ferner Hochabtasten des ersten Teilbildverarbeitungsergebnisses und des zweiten Teilbildverarbeitungsergebnisses umfasst, um mit einer Auflösung des Eingangsbildes übereinzustimmen, bevor das erste zusammengeführte Bild und das zweite zusammengeführte Bild erzeugt werden.

7. Computerimplementiertes Verfahren nach Anspruch 1, das ferner Folgendes umfasst:
Empfangen des Eingabebildes und eines oder mehrerer Bildverarbeitungsparameter, die mit dem kombinierten Bildverarbeitungsergebnis assoziiert sind, von einer fernen Maschine; und
nachdem das kombinierte Bildverarbeitungsergebnis basierend auf dem Eingabebild und dem einen oder den mehreren Bildverarbeitungsparametern erzeugt wurde, Übertragen des kombinierten Bildverarbeitungsergebnisses an die ferne Maschine.

8. Computerimplementiertes Verfahren nach einem vorhergehenden Anspruch, wobei jeder des Satzes von höchstwertigen Bits und des Satzes von niedrigstwertigen Bits die Hälfte der Bits in jedem Pixel des Eingangsbildes umfasst.

9. Computerprogrammprodukt, das Anweisungen speichert, die, wenn sie durch einen oder mehrere Prozessoren ausgeführt werden, bewirken, dass der eine oder die mehreren Prozessoren das Verfahren nach einem der vorhergehenden Ansprüche durchführen.

10. System, das Folgendes umfasst:
einen oder mehrere Speicher, die Anweisungen speichern, und
einen oder mehrere Prozessoren, die mit dem einen oder den mehreren Speichern gekoppelt sind und, wenn die Anweisungen ausgeführt werden, dazu konfiguriert sind, das Verfahren nach einem der Ansprüche 1 bis 8 durchzuführen.

## Revendications

1. Procédé mis en œuvre par ordinateur, comprenant :
la division (704) d'une image d'entrée en une première image partielle et une deuxième image partielle, la première image partielle stockant un premier sous-ensemble de bits dans chaque pixel de l'image d'entrée et la deuxième image partielle stockant un deuxième sous-ensemble de bits, disjoint du premier sous-ensemble de bits, dans chaque pixel de l'image d'entrée ;
la division de l'image d'entrée en la première image partielle et la deuxième image partielle comprenant :
le stockage d'un ensemble de bits de poids fort provenant de chaque pixel dans l'image d'entrée dans la première image partielle ; et
le stockage d'un ensemble de bits de poids faible provenant de chaque pixel dans l'image d'entrée dans la deuxième image partielle ;
la modification (708) d'un premier ensemble de pixels dans la première image partielle pour générer un premier résultat de traitement d'image partielle ;
la modification (708) d'un deuxième ensemble de pixels dans la deuxième image partielle pour générer un deuxième résultat de traitement d'image partielle ; et
la génération (710) d'un résultat de traitement d'image combiné associé à l'image d'entrée sur la base d'une combinaison du premier résultat de traitement d'image partielle, du deuxième résultat de traitement d'image partielle, d'un premier poids associé au premier sous-ensemble de bits, et d'un deuxième poids associé au deuxième sous-ensemble de bits ;
la génération du premier résultat de traitement d'image partielle et du deuxième résultat de traitement d'image partielle comprenant :
la détermination d'une technique d'inpainting sur la base d'un mouvement d'arrière-plan associé à une séquence d'images qui comporte l'image d'entrée ; et
l'application de la technique d'inpainting à la séquence d'images pour générer le premier résultat de traitement d'image partielle et le deuxième résultat de traitement d'image partielle.

2. Procédé mis en œuvre par ordinateur selon la revendication 1, comprenant en outre :
l'application (706) d'une ou de plusieurs opérations de dilatation à un troisième ensemble de pixels dans un masque associé à l'image d'entrée pour générer un masque mis à jour ; et
la génération (708) du premier résultat de traitement d'image partielle et du deuxième résultat de traitement d'image partielle sur la base du masque mis à jour.

3. Procédé mis en œuvre par ordinateur selon la revendication 2, dans lequel la génération du premier résultat de traitement d'image partielle et du deuxième résultat de traitement d'image partielle sur la base du masque mis à jour comprend :
la détermination d'une région cible de l'image d'entrée à partir du masque mis à jour ;
la modification du premier ensemble de pixels correspondant à la région cible pour générer le premier résultat de traitement d'image partielle ; et
la modification du deuxième ensemble de pixels correspondant à la région cible pour générer le deuxième résultat de traitement d'image partielle.

4. Procédé mis en œuvre par ordinateur selon l'une quelconque des revendications précédentes, dans lequel la détermination de la technique d'inpainting comprend :
la sélection d'une première technique d'inpainting qui comporte un modèle d'apprentissage profond lorsque le mouvement d'arrière-plan dépasse un seuil ; et
la sélection d'une deuxième technique d'inpainting qui comporte un modèle de vision par ordinateur lorsque le mouvement d'arrière-plan ne dépasse pas le seuil.

5. Procédé mis en œuvre par ordinateur selon la revendication 1, dans lequel la génération du résultat de traitement d'image combiné comprend :
la fusion du premier résultat de traitement d'image partielle avec la première image partielle pour générer une première image fusionnée ;
la fusion du deuxième résultat de traitement d'image partielle avec la deuxième image partielle pour générer une deuxième image fusionnée ; et
la génération du résultat de traitement d'image combiné sur la base d'une première combinaison du premier poids et de la première image fusionnée et d'une deuxième combinaison du deuxième poids et de la deuxième image fusionnée.

6. Procédé mis en œuvre par ordinateur selon l'une quelconque des revendications précédentes, dans lequel la génération du résultat de traitement d'image combiné comprend en outre le suréchantillonnage du premier résultat de traitement d'image partielle et du deuxième résultat de traitement d'image partielle pour correspondre à une résolution de l'image d'entrée avant la génération de la première image fusionnée et de la deuxième image fusionnée.

7. Procédé mis en œuvre par ordinateur selon la revendication 1, comprenant en outre :
la réception de l'image d'entrée et d'un ou de plusieurs paramètres de traitement d'image associés au résultat de traitement d'image combiné depuis une machine distante ; et
après la génération du résultat de traitement d'image combiné sur la base de l'image d'entrée et du ou des paramètres de traitement d'image, la transmission du résultat de traitement d'image combiné à la machine distante.

8. Procédé mis en œuvre par ordinateur selon l'une quelconque des revendications précédentes, dans lequel l'ensemble de bits de poids fort et l'ensemble de bits de poids faible comprennent chacun la moitié des bits dans chaque pixel de l'image d'entrée.

9. Produit programme d'ordinateur comprenant des instructions qui, lorsqu'elles sont exécutées par un ou plusieurs processeurs, amènent le ou les processeurs à réaliser le procédé selon l'une quelconque des revendications précédentes.

10. Système, comprenant :
une ou plusieurs mémoires stockant des instructions, et
un ou plusieurs processeurs qui sont couplés à la ou aux mémoires et, lorsqu'ils exécutent les instructions, sont configurés pour réaliser le procédé selon l'une quelconque des revendications 1 à 8.
